# EUROPEAN PATENT SPECIFICATION

(11) **EP 1 695 897 B1**
(45) Date of publication and mention of the grant of the patent: **26.03.2008**
(21) Application number: 05101371.2
(22) Date of filing: 23.02.2005
(51) Int. Cl.: B62K 5/08

(54) **Motor vehicle of saddle riding type**
Kraftfahrzeug mit Sattel
Véhicule motorisé du type ayant une selle

(43) Date of publication of application: 30.08.2006
(73) Proprietor: HONDA MOTOR CO., LTD., Tokyo (JP)
(72) Inventor: Takahashi, Shinji c/o K.K. Honda Gijutsu Kenkyusho, SAITAMA (JP); Nakano, Nobuhiko c/o K.K. Honda Gijutsu Kenkyusho, SAITAMA (JP)
(74) Representative: Poulin, Gérard

(56) References cited:
- FR-A- 2 722 752
- US-A1- 2003 034 195
- PATENT ABSTRACTS OF JAPAN vol. 012, no. 078 (M-675), 11 March 1988 (1988-03-11) & JP 62 218243 A (YAMAHA MOTOR CO LTD), 25 September 1987 (1987-09-25)

## Description

### TECHNICAL FIELD

The present invention relates to a motor vehicle of a saddle riding type comprising locking means for preventing a shift change from being made towards the reverse (backward running) side, and releasing means for releasing this locking means, while the motor vehicle is running forward.

### BACKGROUND ART

Among motor vehicles of a saddle riding type, a motor vehicle has been in practical use which comprises locking means for preventing a shift change from being made toward the reverse side while the motor vehicle is running forward. With regard to motor vehicles of a saddle riding type in practical use, it suffices in terms of practical use if the motor vehicles are provided with an operation unit for switching between a forward motion mode and a backward motion mode, and if the operation unit is designed not to switch to a backward motion mode while the motor vehicle is running forward.

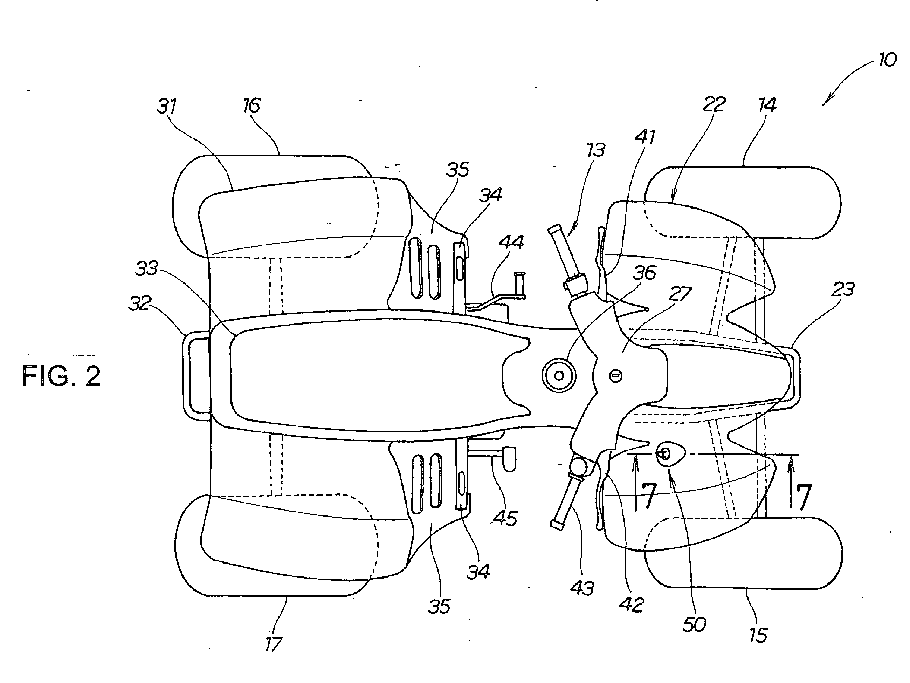

As such motor vehicles of a saddle riding type, a motor vehicle has been known which is provided with a lever (an operation unit) for switching between a forward motion mode and a backward motion mode, the lever being positioned on the right in the vehicle width direction and almost in the middle of the motor vehicle in the vehicle length direction, for example, as disclosed in Japanese Patent Laid-open Official Gazette No. Hei. 7-80426 (page 5, Figure 2).

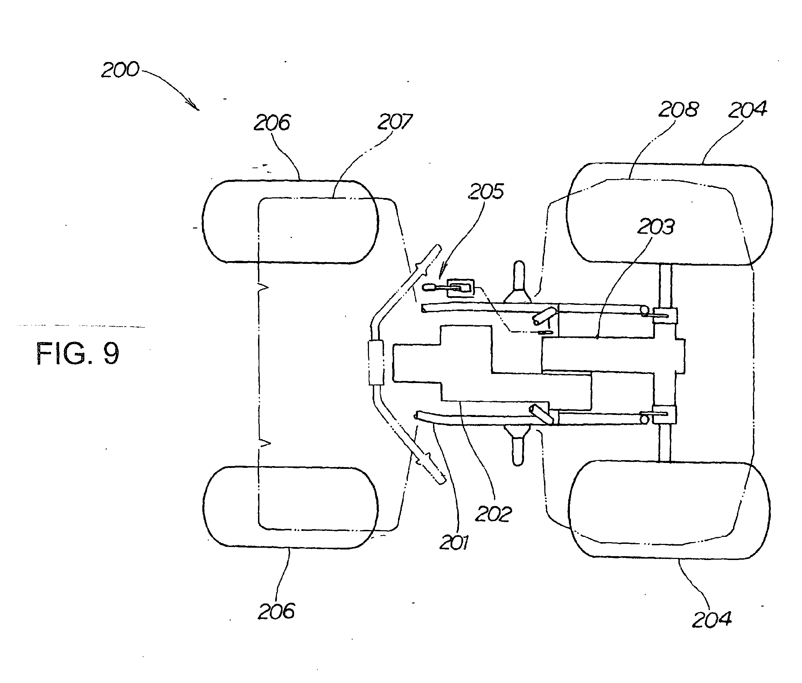

Figure 9 is a diagram explaining a conventional basic constitution. A motor vehicle 200 of a saddle ridding type is a motor vehicle in which a vehicle frame 201 is mounted with an engine 202, the rotation of this engine 202 is shifted by a transmission 203, and the output from this transmission 203 is conveyed to rear wheels 204 and 204. A lever-shaped operation unit 205 for switching the transmission 203 between a forward motion mode and a backward motion mode is provided almost to the middle of the motor vehicle. In the figure, reference numerals 206 and 206 denote front wheels which are mounted to the vehicle frame in a way that the front wheels are rotatable; 207, a front fender covering the front wheels 206 and 206; and 208, a rear fender covering rear wheels 204 and 204.

With regard to the motor vehicle 200 of a saddle riding type, its operability is excellent, since the lever-shaped operation unit 205 for switching between a forward motion mode and a backward motion mode is provided almost to the middle of the motor vehicle. However, in a case where the operation unit 205 is large in size, it brings about a problem that an aesthetic appearance of the motor vehicle is marred.

In addition, since the motor vehicle 200 of a saddle riding type is a motor vehicle to be driven in a rough land, mud and the like are splashed to, and adhered to, the operation unit 205 easily.

In other words, a motor vehicle of a saddle riding type has been awaited which comprises an operation unit, which enables an aesthetic appearance to be improved, and which enables splash of water, mud and the like thereto to be prevented.

An object of the present invention is to provide a motor vehicle of a saddle ridding type whose design can be improved by solving the problem of marring the aesthetic appearance of the motor vehicle. In addition, another object of the present invention is to provide a motor vehicle of a saddle riding type which can prevent mud and the like from adhering to an operation unit by solving the problem of water, mud and the like being splashed to the operation unit.

### DISCLOSURE OF THE INVENTION

In accordance with the invention according to claim 1, a motor vehicle of a saddle riding type comprises: locking means which are provided to the side of the transmission for the purpose of preventing a shift change from being made toward the reverse side while the motor vehicle is running forward; and a lock release mechanism which is provided to the side of a front fender for the purpose of releasing the locking means through a cable. The motor vehicle of a saddle riding type is characterized in that an opening is provided to the front fender for the purpose of arranging the lock release mechanism in the front fender, a main body of the lock release mechanism is housed underneath the opening, an operation unit of the lock release mechanism is caused to stick out upward from the opening, and the sides of the operation unit and the opening are covered with a covering body.

For example, if the lock release mechanism can be installed to the front fender in a compact form, it is preferable in terms of improving the aesthetic appearance (design) of the motor vehicle. If splash of water, mud and the like to the operation unit can be prevented, it is preferable since it allows the motor vehicle to be driven in a rough land freely.

With this taken into consideration, the opening is provided to the front fender for the purpose of arranging the lock release mechanism in the front fender, and the main body of the lock release mechanism is housed underneath the opening. Concurrently, the operation unit of the lock release mechanism is caused to stick out upward from the opening, and the sides of the operation unit and the opening are covered with the covering body.

In other words, the opening is provided to the front fender for the purpose of arranging the lock release mechanism in the front fender, and the main body of the lock release mechanism is housed underneath the opening, and concurrently the operation unit of the lock release mechanism is caused to stick out upward from the opening, thereby installing the lock release mechanism to the front fender in a compact form.

In addition, the sides of the operation unit and the opening are covered with the covering body, thereby preventing splash of water, mud and the like to the operation unit.

According to claim 2, a front fender is interposed between a covering body and a main body, and in that a lock release mechanism is installed to the front fender by fastening the main body to the covering body.

The front fender is interposed between the covering body and the main body, and the lock release mechanism is installed to the front fender by fastening the main body to the covering body, thereby enabling a bracket and a stay for exclusive use to be eliminated, for example when the lock release mechanism is installed thereto.

According to claim 3, a lock release mechanism is provided to a position which allows a driver to operate the lock release mechanism with the right hand.

In general, in many cases, a clutch is operated with the left hand. For this reason, the lock release mechanism is provided to a position which allows a driver to operate the lock release mechanism with the right hand, thereby making it easy to perform an operation of switching between a forward motion mode and a backward motion mode.

According to claim 4, a main body is covered with a mud cover for preventing splash of water, mud and the like to the main body.

The main body is covered with a mud cover for preventing splash of water, mud and the like to the main body, thereby preventing splash of water, mud and the like to the main body, and thereby reducing unevenness in the reverse side of the front fender.

In accordance with the invention according to claim 1, the opening is provided to the front fender for the purpose of arranging the lock release mechanism in the front fender, the main body of the lock release mechanism is housed underneath the opening, and the operation unit of the lock release mechanism is caused to stick out upward from the opening, thereby enabling the lock release mechanism to be installed to the front fender in a compact form. As a result, this brings about advantages that the space efficiency concerning the front fender can be improved, and that the aesthetic appearance (design) of the motor vehicle can be improved.

In addition, the sides of the operation unit are covered with the covering body, thereby enabling mud splash and the like to the operation unit to be prevented. As a result, it brings about an advantage that the motor vehicle can be driven in a rough land freely.

In accordance with the invention according to claim 2, the front fender is interposed between the covering body and the main body, and the lock release mechanism is installed to the front fender by fastening the main body to the covering body, thereby enabling a bracket and a stay for exclusive use to be eliminated, for example when the lock release mechanism is installed thereto. As a result, this brings about an advantage that the number of parts can be reduced.

In accordance with the invention according to claim 3, in general, the clutch is operated with the left hand in many cases, and the lock release mechanism is provided to a position which allows a user to operate the lock release mechanism with the right hand, thereby enabling an operation of switching between a forward motion mode and a backward motion mode to be performed with ease. As a result, this brings about an advantage that operability in the operation of switching between a forward motion mode and a backward motion mode can be improved.

In accordance with the invention according to claim 4, the main body is covered with the mud cover for preventing splash of water, mud and the like to the main body, thereby enabling splash of water, mud and the like to the main body to be prevented, and thereby enabling unevenness in the reverse side of the front fender to be reduced. As a result, this brings about an advantage that the amount of mud adhered to the front fender can be reduced.

### BRIEF DESCRIPTION OF THE DRAWINGS

A description will be provided below for preferred embodiments to carry out the present invention with reference to the attached drawings. Incidentally, each drawing has to be looked at in the direction in which reference numerals have been written.
Figure 1 is a right side view of a motor vehicle of a saddle riding type according to the present invention;
Figure 2 is a plan view of the motor vehicle of a saddle riding type according to the present invention;
Figure 3 is a perspective view showing an operation unit of a lock release mechanism of the motor vehicle of a saddle riding type according to the present invention;
Figure 4 is a perspective view showing a main body of the lock release mechanism of the motor vehicle of a saddle riding type according to the present invention;
Figure 5 is an explanatory view of the lock release mechanism and locking means of the motor vehicle of a saddle riding type according to the present invention;
Figure 6 is an exploded, perspective view of main components related to the lock release mechanism of the motor vehicle of a saddle riding type according to the present invention;
Figure 7 is a cross-sectional view taken along the 7-7 line in Figure 2;
Figure 8 is a cross-sectional view explaining a constitution of the locking means of the motor vehicle of a saddle riding type according to the present invention;
Figure 9 is a view explaining a conventional basic constitution.

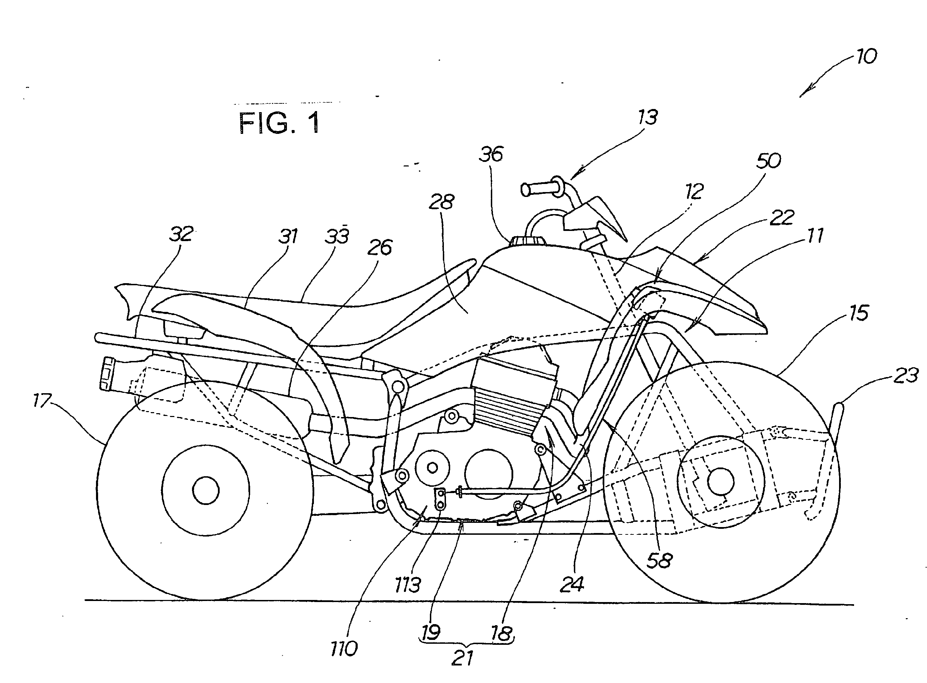

Figure 1 is a right side view of a motor vehicle 10 of a saddle riding type according to the present invention. The motor vehicle 10 of a saddle riding type is a vehicle for being driven in a rough terrain. In the motor vehicle 10, a handle post 12 is installed to the front section of the vehicle frame 11, and a handle 13 is installed onto the handle post 12 in a way that the handle 13 can be rotated. Front wheels 14 and 15 as right and left wheels (only the front wheel 15 on this side is illustrated) are installed to the lower end of the front section of the vehicle frame 11 in a way that the wheels 14 and 15 can rotate. Right and left rear wheels 16 and 17 (only the rear wheel 17 on this side is illustrated) are installed to the lower end of the rear section of the vehicle frame 11 in a way that the right and left rear wheels 16 and 17 can rotate. A power unit 21 comprising an engine 18 and a transmission 19 is installed to the middle of the vehicle frame 11 in order to drive these front wheels 14 and 15 as well as these rear wheels 16 and 17.

In other words, the motor vehicle 10 of a saddle riding type is a four-wheel-drive buggy, and is classified as an ATV (All-Terrain Vehicle). Since the body of the motor vehicle 10 of a saddle riding type is light in weight and compact in size, and since the motor vehicle 10 of a saddle riding type is a motor vehicle capable of hard cornering and with easy operability, the motor vehicle 10 of a saddle riding type is an off-road vehicle suitable for transportation in agriculture, livestock farming, hunting, safety surveillance and the like as well as for leisure activities.

In addition, the motor vehicle 10 of a saddle riding type is a motor vehicle comprising: locking means 110 which is provided to the side of the transmission 19 for the purpose of preventing a shift change from being made toward the reverse (backward running) side while the motor vehicle 10 is running forward; and a lock release mechanism 50 which is provided to the side of the front fender 22 for the purpose of releasing the locking means 110 through a cable 58.

In the figure, reference numeral 23 denotes a front guard for protecting the front section of the vehicle body; 24, an exhaust pipe connected to the front portion of the engine 18; 26, a silencer (muffler) connected to the exhaust pipe; 28, a side cover; 31, a rear fender; 32, a seat rail extended from the right and left of the vehicle body frame 11 to the rear; 33, a seat; and 36, a fuel tank cap.

Figure 2 is a plan view of the motor vehicle 10 of a saddle riding type according to the present invention. Reference numeral 27 denotes a handle cover; 34 and 34, step bars; 35 and 35, floor steps; 41, a clutch lever; 42, a brake lever for braking the front wheels 14 and 15; 43, an accelerator provided to the handle 13; 44, a shift change pedal for choosing between a forward motion mode and a backward motion mode of the transmission 19, and for selecting a transmission gear ratio thereof; and 45, a brake pedal for braking the rear wheels 16 and 17.

With the motor vehicle 10 of a saddle riding type, the clutch (not illustrated) is disconnected by grasping the clutch lever 41 with the left hand, and a transmission gear ratio of the transmission 19 is selected by operating the shift change pedal 44 with the left foot, thereby enabling the motor vehicle 10 to be driven forward. In addition, the front wheels 14 and 15 are braked by grasping the brake lever 42 with the right hand, and the rear wheels 16 and 17 are braked by stepping on the brake pedal 45 with the right foot, thereby enabling the motor vehicle 10 to be stopped. Furthermore, the clutch lever 41 is grasped with the left hand in a state that the motor vehicle 10 is kept stopping, and an operation knob 51 as the operation unit of the lock releasing mechanism 50 is turned to the right by a quarter rotation with the right hand, and the transmission 19 is set to the reverse (backward running) side by operating the shift change pedal 44 with the left foot, and the accelerator 43 is operated with the right hand, thereby enabling the motor vehicle 10 to be driven backward.

It can be said that the motor vehicle 10 of a saddle riding type is a motor vehicle in which the lock release mechanism 50 is provided to a position which allows a driver to operate the lock release mechanism 50 with the right hand, or to the right side of the front fender 22.

In general, in many cases, the clutch is operated with the left hand. For this reason, the lock release mechanism 50 is provided to a position which allows a driver to operate the lock release mechanism 50 with the right hand, thereby enabling an operation of switching between a forward motion mode and a backward motion mode to be performed with ease (in a simple manner). As a result, the operability in the operation of switching between a forward motion mode and a backward motion mode can be improved.

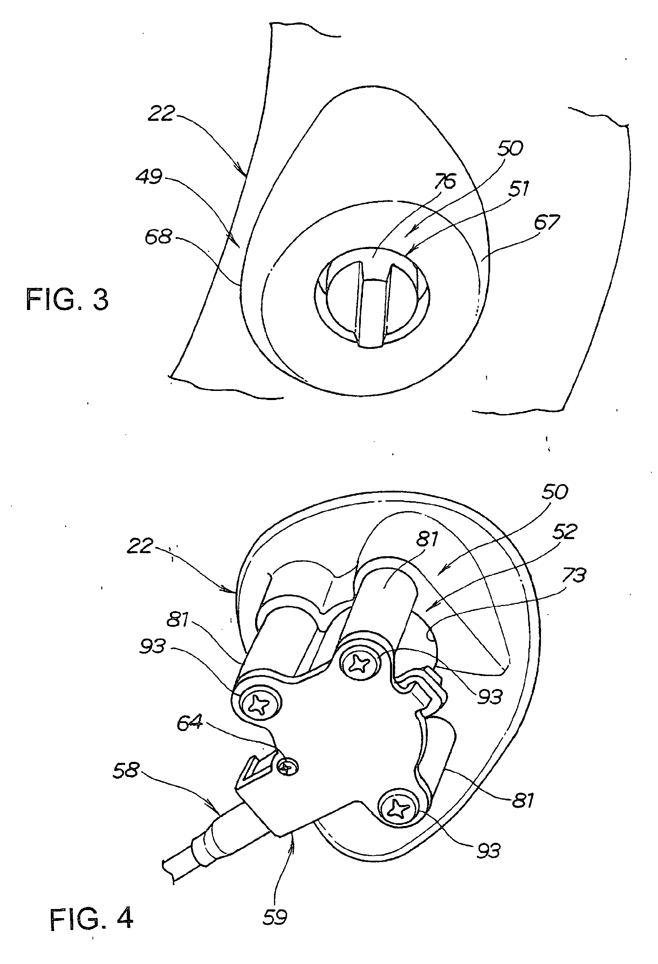

Figure 3 is a perspective view showing an operation unit 51 of the lock release mechanism 50 of the motor vehicle 10 of a saddle riding type according to the present invention. Figure 4 is a perspective view showing a main body 52 of the lock release mechanism 50 of the motor vehicle 10 of a saddle riding type according to the present invention.

The motor vehicle 10 of a saddle riding type is a motor vehicle in which an opening 73, shown in Figure 4, through which to install the lock release mechanism 50 to the front fender 22 is provided, and the main body 52 of the lock release mechanism 50 is housed underneath this opening 73, and an operation knob (operation unit) 51, shown in Figure 3, of the lock release mechanism 50 is caused to stick out upward from the opening 73, thereby installing the lock release mechanism 50 to a front fender 22 in a compact form. In addition, the sides of the operation knob (operation unit) 51 are covered with a covering body 49 shown in Figure 3, thereby preventing splash of water, mud and the like to the operation knob 51. Furthermore, a cable 58 is extended out from the main body 52 to a transmission 19 shown in Figure 1, and the transmission 19 is to the extremity of the cable 58, thereby remotely controlling the locking means 110.

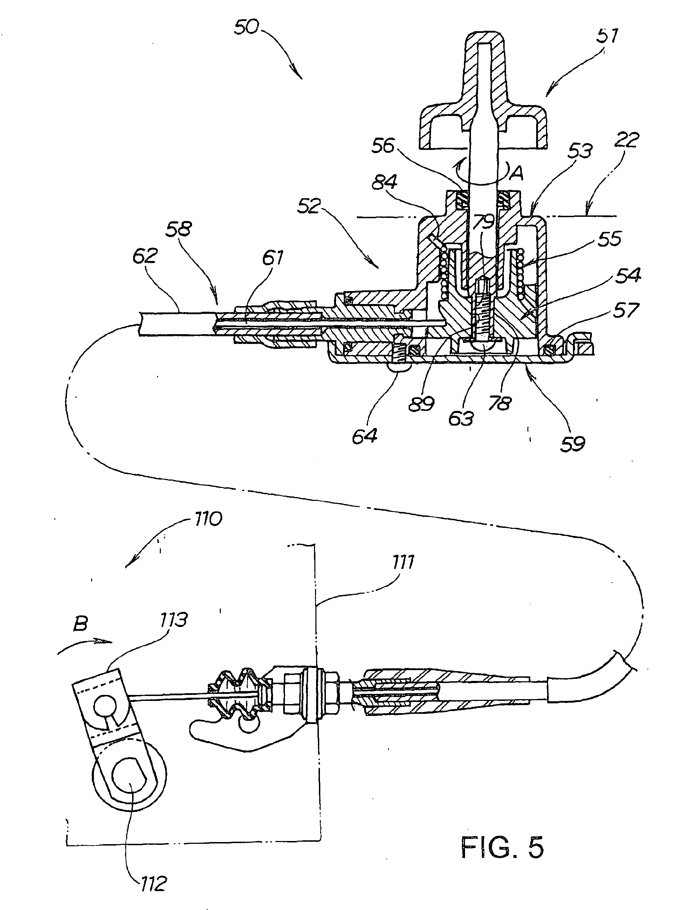

Figure 5 is an explanatory diagram of the lock release mechanism 50 and the locking means 110 of the motor vehicle 10 of a saddle riding type according to the present invention.

The lock release mechanism 50 is constituted of the operation knob (operation unit) 51 which is caused to stick out upward from the front fender 22 and the main body 52 housed underneath the front fender 22.

The main body 52 includes: a housing 53 to be installed to the front fender 22; a revolving spool (revolving drum) 54 housed in this housing 53 in a way that the revolving spool (revolving drum) can revolve; a restoring spring 55 interposed between this revolving spool 54 and this housing 53; a dust seal 56 with which the interstices between the operation knob 51 and the housing 53 are sealed; and a bracket 59 which is installed to the housing 53 with an o-ring 57 interposed between the bracket 59 and the housing 53, and which supports the cable 58 extended from the revolving spool 54. Incidentally, a rotation angle of the operation knob 51 is set in a range of 45 degrees to 90 degrees by adjusting the play of the cable 58. In the present embodiment, it is assumed that the rotation angle is set at 65 degrees.

In the figure, reference numeral 61 denotes an inner wire of the cable 58; 62, an outer tube of the cable 58; 63, a screw with which the operation knob 51 is fastened to the revolving spool 54; and 64, a fitting screw with which the bracket 59 is fastened to the housing 53.

In other words, the lock release mechanism 50 is a mechanism in which the revolving spool 54 is installed to the operation knob 51, the cable 58 is coiled around the revolving spool 54, this cable 58 is extended from the housing 53, and the extremity of the cable 58 is connected to an operation lever 113 of the locking means 110 which is provided to the side of the transmission 19. The locking means 110 is released by rotating the operation knob 51 in the direction shown by an arrow A, and by rotating the operation lever 113 in the direction shown by an arrow B, thereby allowing a shift change to be made toward the reserve (backward running) side.

By releasing the operation knob 51, the restoring function (elastic function) of the restoring spring 55 interposed between the housing 53 and the revolving spool 54 can return the lock release mechanism 50 and the locking means 110 to the initial condition.

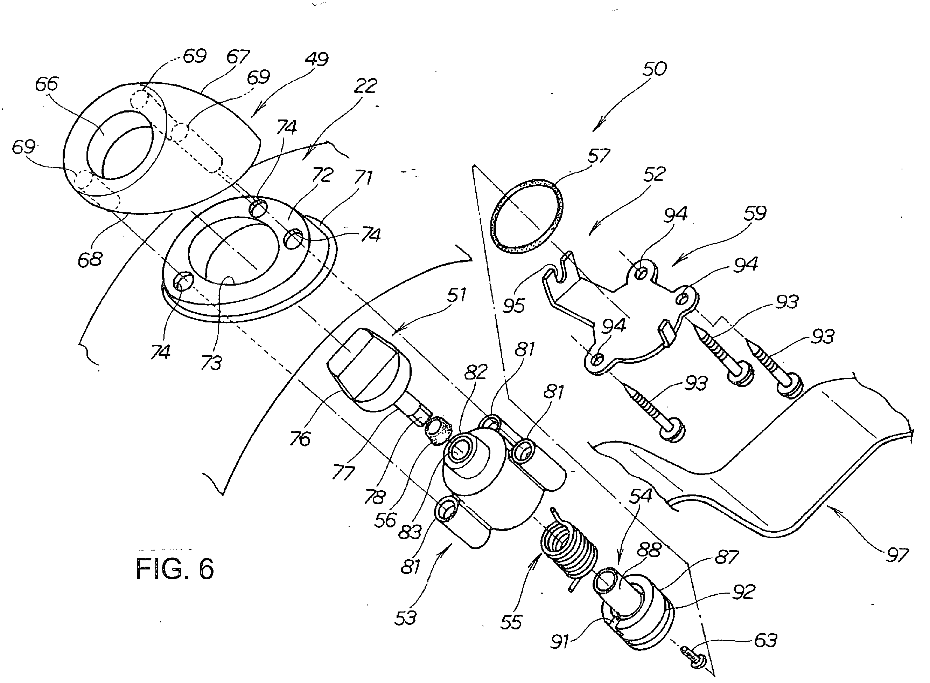

Figure 6 is an exploded, perspective view of main components related to the lock release mechanism 50 of the motor vehicle 10 of a saddle riding type according to the present invention.

In the covering body 49, the followings are formed; a through hole through which the operation knob 51 is caused to penetrate, a covering portion 67 for covering the sides (outer periphery) of the operation knob 51, an edge portion 68 which is caused to contact the front fender 22, and screw fitting bosses 69,( means a plurality) through which the main body 52 and the front fender 22 are fastened jointly.

The front fender includes: a concave portion 71 which has the same shape as the edge portion 68 of the covering body 49 does; a receiving portion 72 for receiving the housing 53, the receiving portion 72 being formed in a way that it sticks out from this concave portion 71; an opening 73 which is made in the receiving portion 72, and which, thereby, the operation knob 51 is caused to penetrate through; and insertion holes 74, which are made in the receiving portion 72, and which, thereby, the screw fitting bosses 69, are inserted into.

In other words, the concave portion 71 which has the same shape as the edge portion 68 of the covering body 49 are provided to the front fender 22, thereby enabling the edge portion 68 of the covering body 49 to be positioned to this concave portion 71. As a result, conditions in which the lock release mechanism 50 and the covering body 49 are fastened thereto is improved, and convenience with which the lock release mechanism 50 and the covering body 49 are fastened thereto is enhanced.

In the operation knob 51, the followings are formed: a tab 76 which is held with a thumb and a forefinger; an extended portion 77 which is extended from this tab 76, and which is formed as a portion separate from the extended portion 76; a spool fitting portion 78 which is formed at the extremity of the extended portion 77 in a way that the spool fitting portion 78 is shaped like an oval when viewed cross-sectionally, and which, thereby, is caused to fit into the revolving spool 54; and a stop hole 79 (see Figure 5) which is made in the lower surface of the spool fitting portion 78, and which, thereby, a stop screw 63 is fastened to the spool fitting portion 78 through.

In the housing 53, the followings are formed: boss portions 81, which are fastened jointly to the front fender 22 and the covering body 49 with fitting screws; a seal fitting portion 82 in which the dust seal 56 is fitted; a support cylinder 83 for supporting the operation knob 51 in a way that the operation knob 51 can rotate; and a one-end holding portion 84 (see Figure 5) for holding one end of the restoring spring 55.

The revolving spool 54 includes: an outer cylinder portion 87 which is installed to the housing 53 in a way that the outer cylinder portion 87 can rotate; an inner cylinder portion 88 for supporting the restoring spring 55; a fitting hole 89 (see Figure 5) to which the operation knob 51 is fitted, and which is shaped like an oval when viewed cross-sectionally; a the-other-end holding portion 91 for holding the other end of the restoring spring 55; and a cable coiling portion 92 around which the cable 58 is coiled.

The bracket 59 includes: holes 94, through which fitting screws 93, ... are caused to penetrate, the fitting screws 93 with which the bracket 59, the housing 53, the front fender 22 and the covering body 49 are fastened jointly; and a cable support portion 95 for supporting the cable 58 (see Figure 5).

A mud cover 97 is also a member which prevents splash of water, mud and the like to the housing 53 and the bracket 59, and which also reduces unevenness in the reverse side of the front fender 22.

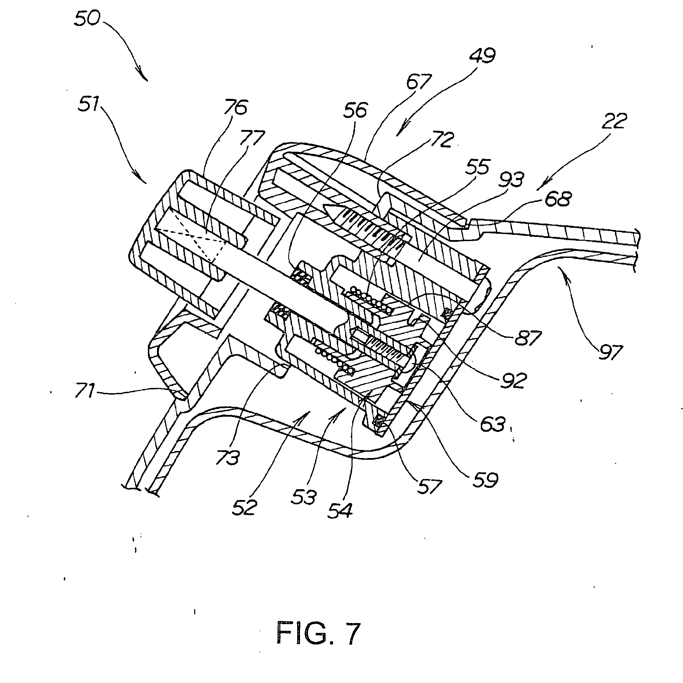

Figure 7 is a cross sectional view taken along the 7-7 line in Figure 2, and shows the side cross-section of the lock release mechanism 50.

The followings can be said. The motor vehicle 10 of a saddle riding type (see Figure 1) comprises: the locking means 110 (see Figure 1) which is provided to the side of the transmission 19 for the purpose of preventing a shift change from being made toward the reverse side while the motor vehicle 10 is running forward; and the lock release mechanism 50 which is provided to the side of the front fender 22 for the purpose of releasing the locking means 110 through the cable 58. In the motor vehicle 10 of a saddle riding type, the opening 73 is provided to the front fender 22 for the purpose of arranging the lock release mechanism 50 in the front fender 22, the main body 52 of the lock release mechanism 50 is housed underneath this opening 73, the operation knob (operation unit) 51 is caused to stick out upward from the opening 73, and the sides of this operation knob 51 and the opening 73 (around the operation knob 51) are covered with the covering body 49.

For example, if the lock release mechanism 50 can be installed to the front fender 22 in a compact form, it is preferable in terms of improving the aesthetic appearance (design) of the motor vehicle 10. If splash of water, mud the like to the operation unit 51 can be prevented, it is preferable since the motor vehicle 10 can be driven in a rough land freely.

In other words, the opening 73 is provided to the front fender 22 for the purpose of arranging the lock release mechanism 50, the main body 52 of the lock release mechanism 50 is housed underneath this opening 73, and the operation knob (operation unit) 51 is caused to stick out upward from the opening 73, thereby enabling the lock release mechanism 50 to be installed to the front fender 22 in a compact form. As a result, the space efficiency concerning the front fender 22 can be improved, and the aesthetic appearance (design) of the motor vehicle 10 can be improved.

In addition, the sides of the operation knob (operation unit) 51 and the opening 73 are covered with the covering body 49, thereby enabling splash of water, mud and the like to the operation knob 51 to be prevented. As results, the motor vehicle can be driven in a rough land freely.

It can be said that, in the motor vehicle 10 of a saddle riding type (see Figure 1), the front fender 22 is interposed between the covering body 49 and the main body 52, and that the lock release mechanism 50 is installed to the front fender 22 by fastening the main body 52 to the covering body 49.

The front fender 22 is interposed between the covering body 49 and the main body 52, and the lock release mechanism 50 is installed to the front fender 22 by fastening the main body 52 to the covering body 49, thereby, for example, enabling the bracket and the stay for exclusive use to be eliminated when the lock release mechanism 50 is installed. As a result, the number of parts can be reduced.

It can be said that, in the motor vehicle 10 of a saddle riding type (see Figure 1), the main body 52 is covered with the mud cover 97 for preventing splash of water, mud and the like to the main body.

The main body 52 is covered with the mud cover 97 for preventing splash of water, mud and the like to the main body 52, thereby enabling splash of water, mud and the like to the main body to be prevented, and thereby enabling unevenness in the reverse side of the front fender to be reduced. As result, the amount of mud adhering to the front fender 22 can be reduced.

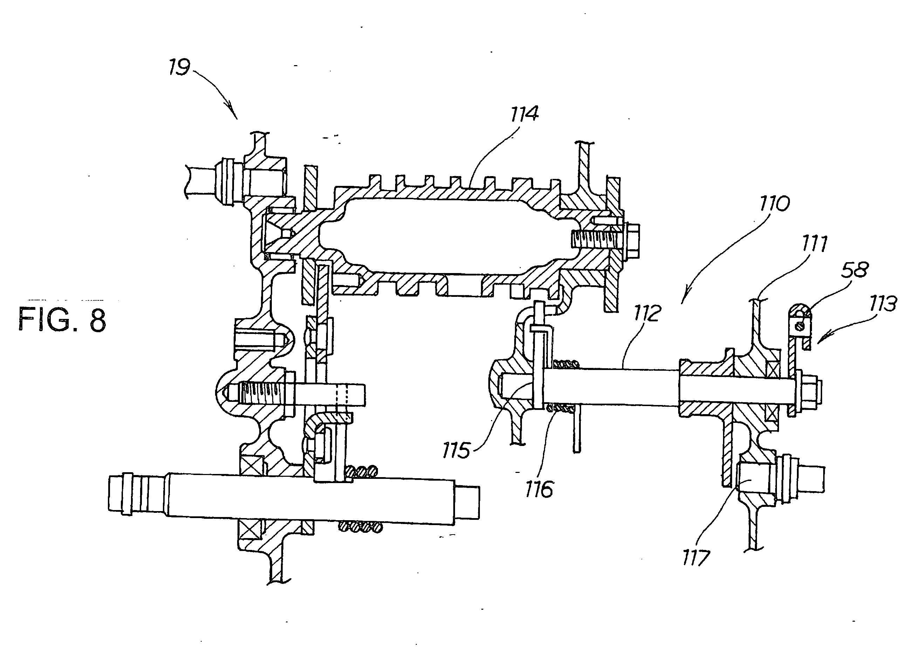

Figure 8 is a cross-sectional view explaining a constitution of the locking means 110 of the motor vehicle 10 of a saddle riding type according to the present invention. The locking means 110 includes: a rotating shaft 112 which is installed to a transmission case 111 in a way that the rotating shaft can rotate; an operation lever 113 which is connected with the extremity of the cable 58 by installing the operation lever 113 to one end of this rotating shaft 112; a stopper arm 115 for restricting a rotation of the drum 114 for displacing a transmission gear (not illustrated) to a predetermined position by installing the stopper arm 115 to the other end of the rotating shaft 112; a torsion spring 116 for energizing the rotating shaft 112 in a predetermined direction by causing the torsion spring 116 to be interposed between this stopper arm 115 and the transmission case 111; and a detection switch 117 for detecting the rotation of the rotating shaft 112, and for detecting the condition of the stopper arm 115. The locking means 110 is to prevent a shift change from being made toward the reverse side by restricting the rotation of the drum 114.

Incidentally, the motor vehicle 10 of a saddle riding type according to the present invention is a four-wheeled vehicle, as shown in Figure 2. However, the motor vehicle is not limited to this. The motor vehicle 10 of a saddle riding type may be a three-wheeled vehicle.

With regard to the motor vehicle 10 of a saddle riding type according to the present invention, the operation unit is the operation knob 51, as shown in Figure 4. However, the operation unit is not limited to this. The operation unit may be what is shaped, for example, like a lever.

With regard to the motor vehicle 10 of a saddle riding type according to the present invention, the tab 76, and the extended portion 77, of the operation knob 51 are formed as separated bodies, as shown in Figure 7. However, the tab 76 and the extended portion 77 are not limited to this. The tab 76, and the extended portion 77, of the operation knob 51 may be formed integrally.

With regard to the motor vehicle 10 of a saddle riding type according to the present invention, the rotation angle of the operation knob 51 is set at 65 degrees. However, the rotation angle of the operation knob 51 is not limited to this. The rotation angle of the operation knob 51 may be an arbitrary angle by which the operation knob 51 rotates.

The motor vehicle 10 of a saddle riding type according to the present invention is suitable as an all-terrain vehicle for enjoying sport driving.

## Claims

1. A motor vehicle of a saddle riding type comprising;
locking means which is provided to the side of a transmission for the purpose of preventing a shift change from being made toward the reverse side while the motor vehicle of a saddle riding type is running forward; and
a lock releasing mechanism (50) which is provided to the side of a front fender (22) for the purpose of releasing the locking means through a cable (58),
wherein an opening is provided to the front fender (22) for the purpose of arranging the lock release mechanism(50) in the front fender (22), and a main body (52) of the lock release mechanism (50) is housed underneath this opening, and
wherein an operation unit of the lock release mechanism (50) is caused to stick out upward from the opening, and the sides of the operation unit and the opening are covered with a covering body (49).

2. The motor vehicle of a saddle riding type according to claim 1,
wherein the front fender (22) is interposed between the covering body (49) and the main body (52), and the lock release mechanism (50) is installed to the front fender (22) by fastening the main body (52) to the covering body (49).

3. The motor vehicle of a saddle riding type according to claim 1,
wherein the lock releasing mechanism (50) is provided to a position which allows a driver to operate the lock releasing mechanism (50) with the right hand.

4. The motor vehicle of a saddle riding type according to any one of claims 1, 2 and 3,
wherein the main body (52) is covered with a mud cover (97) for preventing splash of water, mud and the like to the main body (52).

## Patentansprüche

1. Motorfahrzeug vom Sattelfahrtyp, umfassend:
eine Verriegelungseinrichtung, die an der Seite eines Getriebes vorgesehen ist, um einen Gangwechsel nach rückwärts zu verhindern, während das Motorfahrzeug vom Sattelfahrtyp vorwärts fährt; und
einen Verriegelungslösemechanismus (50), der an der Seite eines vorderen Schutzblechs (22) vorgesehen ist, um die Verriegelungseinrichtung mittels eines Kabels (58) zu lösen,
wobei eine Öffnung am vorderen Schutzblech (22) vorgesehen ist, um den Verriegelungslösemechanismus (50) im vorderen Schutzblech (22) anzuordnen, und ein Hauptgehäuse (52) des Verriegelungslösemechanismus (50) unter dieser Öffnung angeordnet ist, und
wobei eine Betätigungseinheit des Verriegelungslösemechanismus (50) derart angeordnet ist, dass sie aus der Öffnung heraus nach oben vorsteht, und die Seiten der Betätigungseinheit sowie die Öffnung mit einem Abdeckgehäuse (49) bedeckt sind.

2. Motorfahrzeug vom Sattelfahrtyp nach Anspruch 1, wobei das vordere Schutzblech (22) zwischen dem Abdeckgehäuse (49) und dem Hauptgehäuse (52) zwischengefügt ist, und wobei der Verriegelungslösemechanismus (50) durch Befestigung des Hauptgehäuses (52) an dem Abdeckgehäuse (49) am vorderen Schutzblech (22) angebracht ist.

3. Motorfahrzeug vom Sattelfahrtyp nach Anspruch 1, wobei der Verriegelungslösemechanismus (50) an einer Position vorgesehen ist, die es einem Fahrer ermöglicht, den Verriegelungslösemechanismus (50) mit der rechten Hand zu betätigen.

4. Motorfahrzeug vom Sattelfahrtyp nach einem der Ansprüche 1, 2 und 3, wobei das Hauptgehäuse (52) mit einer Schmutzabdeckung (97) abgedeckt ist, um zu verhindern, dass Wasser, Schmutz und dergleichen auf das Hauptgehäuse (52) spritzt.

## Revendications

1. Véhicule motorisé du type ayant une selle comprenant :
des moyens de verrouillage qui sont prévus sur le côté d'une transmission dans le but d'empêcher un changement de déplacement d'être effectué dans une direction opposée alors que le véhicule motorisé du type ayant une selle est en marche avant ; et
un mécanisme de déverrouillage (50) qui est prévu sur le côté d'un garde-boue avant (22) dans le but de desserrer les moyens de verrouillage via un câble (58),
dans lequel une ouverture est prévue dans le garde-boue avant (22) dans le but de disposer le mécanisme de déverrouillage (50) dans le garde-boue avant (22), et un corps principal (52) du mécanisme de déverrouillage (50) est logé au-dessous de cette ouverture, et
dans lequel une unité de manoeuvre du mécanisme de déverrouillage (50) dépasse vers le haut depuis l'ouverture, et les côtés de l'unité de manoeuvre et l'ouverture sont recouverts par un corps couvrant (49).

2. Véhicule motorisé de type ayant une selle selon la revendication 1,
dans lequel le garde-boue avant (22) est interposé entre le corps couvrant (49) et le corps principal (52), et le mécanisme de déverrouillage (50) est installé dans le garde-boue avant (22) en fixant le corps principal (52) au corps couvrant (49).

3. Véhicule motorisé de type ayant une selle selon la revendication 1,
dans lequel le mécanisme de déverrouillage (50) est prévu dans une position qui permet à un conducteur d'actionner le mécanisme de déverrouillage (50) à l'aide de la main droite.

4. Véhicule motorisé de type ayant une selle selon l'une quelconque des revendications 1, 2 et 3,
dans lequel le corps principal (52) est recouvert par un couvercle contre la boue (97) pour prévenir le corps principal (52) de toute éclaboussure d'eau, de boue et similaires.
